# EUROPÄISCHE PATENTANMELDUNG

(11) **EP 4 737 090 A1**
(43) Veröffentlichungstag der Anmeldung: **06.05.2026**
(21) Anmeldenummer: 25211881.5
(22) Anmeldetag: 29.10.2025
(51) Int. Cl.: B29C 35/08, B29C 37/00, B29D 11/00

(54) **VERFAHREN ZUR HERSTELLUNG EINES OPTISCH WIRKSAMEN KUNSTSTOFF-BAUTEILS**

(30) Priorität: 29.10.2024 DE 102024131508
(71) Anmelder: Müller + Wilisch GmbH, 82340 Feldafing (DE); Hochschule Esslingen University of Applied Sciences, 73728 Esslingen am Neckar (DE)
(72) Erfinder: Allgäuer, Dominik, 82340 Feldafing (DE); Franz, Stephan, 82178 Puchheim (DE); Deckert, Matthias, 74172 Neckarsulm (DE); Melzer-Bartsch, Alexander, 73733 Esslingen (DE)
(74) Vertreter: Grättinger Möhring von Poschinger Patentanwälte Partnerschaft mbB

(57) **Zusammenfassung**

Ein Verfahren zur Herstellung eines optisch wirksamen Kunststoff-Bauteils mit einer Mikro-Struktur auf zumindest einer ersten Hauptfläche umfasst die Schritte:
- Herstellen eines Bauteil-Kernkörpers durch Spritzgießen in einem Spritzgießwerkzeug (21);
- Einlegen des erstarrten Bauteil-Kernkörpers in ein Spritzprägewerkzeug (23);
- Schließen des Spritzprägewerkzeugs (23) unter Belassung eines Spalts zwischen einer Hauptfläche des eingelegten Bauteil-Kernkörpers und einer dieser gegenüberliegenden, mikrostrukturierten Wand der Spritzprägewerkzeug-Kavität (27);
- zumindest teilweises Befüllen des Spalts mit einem flüssigen lichthärtenden Beschichtungslack;
- flächiges Beaufschlagen des flüssigen Beschichtungslacks mit Druck durch Kraftschließen des Spritzprägewerkzeugs (23), wodurch auf dem Bauteil-Kernkörper eine Beschichtungs-Schicht mit einer Mikro-Struktur auf ihrer freien Oberfläche gebildet wird;
- Aushärten der Beschichtungs-Schicht durch deren Bestrahlen mit Licht in dem geschlossenen Spritzprägewerkzeug (23) aus mindestens einer integrierten, in die Spritzprägewerkzeug-Kavität (27) hinein strahlenden Lichtquelle (37);
- Öffnen der Spritzprägewerkzeug-Kavität (27) und Entnehmen des optisch wirksamen Kunststoff-Bauteils.

## Beschreibung

Die vorliegende Erfindung betrifft die Herstellung eines optisch wirksamen Kunststoff-Bauteils, insbesondere einer Linse, mit zwei einander gegenüberliegenden Hauptflächen. Insbesondere betrifft die vorliegende Erfindung dabei ein Verfahren zur Herstellung eines solchen optisch wirksamen Kunststoff-Bauteils, bei dem zumindest eine erste Hauptfläche eine Mikro-Struktur aufweist.

Während bei klassischen Linsen im Hinblick auf deren optische Wirksamkeit - im Sinne einer gezielten Beeinflussung des Strahlengangs - mindestens eine der beiden einander gegenüberliegenden Hauptflächen global (konvex oder konkav) gekrümmt ist und die Dicke der Linse sich ausgehend von der Achse zum Rand hin ändert (d. h. abnimmt oder zunimmt), ist dies bei optisch wirksamen Bauteilen, bei dem zumindest eine erste Hauptfläche eine optisch wirksame Mikro-Struktur (beispielsweise in Form einer Fresnel-Struktur) aufweist, nicht zwingend der Fall. Vielmehr können solche Linsen eine (global, d. h. unter Vernachlässigung der optisch wirksamen Mikro-Struktur) konstante Dicke aufweisen, namentlich indem hier die beiden einander gegenüberliegenden Hauptflächen global parallel zueinander verlaufen. Einer der wesentlichen damit verbundenen Vorteile besteht in der hierdurch möglichen Materialeinsparung und dem auf diese Weise - im Vergleich zu klassischen Linsen gleicher optischer Wirksamkeit - reduzierten Gewicht.

Während in der Vergangenheit Linsen und andere optisch wirksame Bauteile regelmäßig aus Glas hergestellt wurden, gerät in jüngerer Zeit - und zwar ebenfalls unter dem Gesichtspunkt eines reduzierten Gewichts, allerdings auch aus Gründen einer möglichst kostengünstigen Produktion namentlich im Falle von in Großserie herzustellenden optischen Linsen - zunehmend die Herstellung solcher Bauteile aus Kunststoff in den Fokus.

Die erhebliche Anzahl unterschiedlicher Ansätze in dieser Richtung belegt das große kommerzielle Interesse an entsprechender Technologie. Gemessen daran sind die Ergebnisse, was die praktische Brauchbarkeit in anspruchsvollen Anwendungen angeht, allerdings häufig enttäuschend. Vor diesem Hintergrund hat sich die vorliegende Erfindung zur Aufgabe gemacht, ein Verfahren zur Herstellung eines optisch wirksamen Kunststoff-Bauteils, insbesondere einer Linse, mit zwei einander gegenüberliegenden Hauptflächen, von denen zumindest eine erste Hauptfläche eine Mikro-Struktur aufweist, bereitzustellen, unter dessen Anwendung sich besonders praxistaugliche optisch wirksame Kunststoff-Bauteile herstellen lassen. Zu verstehen ist hierunter insbesondere die Möglichkeit der vergleichsweise kostengünstigen Herstellung von qualitativ hochwertigen und mechanisch unempfindlichen Linsen und anderen optisch wirksamen Bauteilen, die hohen optischen Anforderungen genügen und sich somit auch zur Verwendung in anspruchsvollen Anwendungen eignen.

Gemäß der vorliegenden Erfindung wird die vorstehend dargelegte Aufgabenstellung, wie im Anspruch 1 angegeben, durch ein Verfahren der eingangs genannten Art gelöst, welches in Kombination miteinander die folgenden Schritte umfasst:
- Herstellen eines Bauteil-Kernkörpers aus einem Kern-Kunststoff durch Spritzgießen oder Spritzprägen in einer geschlossenen ersten Kavität eines ersten Spritzgieß- oder Spritzprägewerkzeugs;
- Öffnen der ersten Kavität und Entnehmen des erstarrten Bauteil-Kernkörpers aus der geöffneten ersten Kavität;
- Einlegen des erstarrten Bauteil-Kernkörpers in eine geöffnete zweite Kavität eines zweiten Spritzprägewerkzeugs;
- Schließen des zweiten Spritzprägewerkzeugs mit dem darin aufgenommenen Bauteil-Kernkörper unter Belassung eines Spalts zwischen der ersten Hauptfläche des Bauteil-Kernkörpers und einer dieser gegenüberliegenden, mikrostrukturierten Wand der zweiten Kavität;
- zumindest teilweises Befüllen des Spalts mit einem flüssigen lichthärtenden Beschichtungslack;
- flächiges Beaufschlagen des flüssigen Beschichtungslacks mit Druck durch Kraftschließen des zweiten Spritzprägewerkzeugs unter Bildung einer gegenüber dem Bauteil-Kernkörper dünnen Beschichtungs-Schicht auf der ersten Hauptfläche des Bauteil-Kernkörpers, wobei die Mikro-Struktur der ersten Hauptfläche des optisch wirksamen Kunststoff-Bauteils auf der freien Oberfläche der Beschichtungs-Schicht gebildet wird;
- Aushärten der Beschichtungs-Schicht durch deren Bestrahlen mit Licht in dem geschlossenen zweiten Spritzprägewerkzeug aus mindestens einer in das zweite Spritzprägewerkzeug integrierten, in die zweite Kavität hinein strahlenden Lichtquelle;
- Öffnen der zweiten Kavität und Entnehmen des den erstarrten Bauteil-Kernkörper und die auf dessen erster Hauptfläche ausgeführte ausgehärtete, die mikrostrukturierte Hauptfläche des Kunststoff-Bauteils ausbildende Beschichtung umfassenden optisch wirksamen Kunststoff-Bauteils aus der zweiten Kavität.

Im synergistischen Zusammenwirken mit den weiteren für das erfindungsgemäße Verfahren charakteristischen Verfahrensschritten kommt dabei der Ausführung der optischwirksam mikrostrukturierten ersten Hauptfläche des Bauteils auf einer Beschichtung, welche (in einem von dem für die Herstellung des zu beschichtenden Bauteil-Kernkörpers aus Kunststoff mittels Spritzgießen oder Spritzprägen verwendeten ersten Werkzeug verschiedenen zweiten Werkzeug) in einem Spritzprägeschritt aus einem lichthärtenden Lack auf der - beveorzugt ihrerseits mikrostrukturierten (s. u.) - Oberfläche des Bauteil-Kernkörpers unter Aushärten der LackBeschichtung in dem zweiten Werkzeug mittels einer in dieses integrierten Lichtquelle hergestellt wird, besondere Bedeutung zu.

Durch die erfindungsgemäße Verfahrensführung lässt sich eine optisch wirksame Mikro-Struktur höchster optischer Qualität und Güte herstellen, wozu namentlich auch das Aushärten des zur Bildung der Beschichtung verwendeten Lacks in dem (ungeöffneten) zweiten Spritzprägewerkzeug unter optimal kontrollierbaren, reproduzierbaren Bedingungen beiträgt. Namentlich lässt sich durch die Verarbeitung des die Beschichtung bildenden Lacks in einem Spritzprägeschritt und Aushärtung der Lackschicht unter Licht-Bestrahlung in der zweiten Kavität eine besonders konturenscharfe und somit optisch besonders hochwertige Mikrostruktur erzeugen. Zugleich ist - aus dem gleichen Grund - das erfindungsgemäß zum Einsatz kommende Verfahren besonders zuverlässig. Auch sind die Herstellungskosten für die in Anwendung der vorliegenden Erfindung gefertigten beschichteten Kunststoff-Bauteile vergleichsweise niedrig, wozu auch die möglichen kurzen Zykluszeiten sowie die sehr geringe Fehlerquote beitragen. Weiterhin lässt sich das erfindungsgemäße Verfahren mit vergleichsweise geringem Aufwand an unterschiedliche Anforderungen (z. B. zur Herstellung von Beschichtungen mit unterschiedlichen optischen Eigenschaften; s. u.) adaptieren, was entsprechend geringe Investitionsosten auf Seiten des Herstellungsunternehmens zur Folge hat. Überdies lässt sich über die zur Herstellung der hochpräzisen optisch wirksamen Mikro-Struktur verwendete Beschichtung das - kostengünstig durch Spritzgießen oder Spritzprägen hergestellte - Kern-Bauteil wirksam vor schädlichen mechanischen Einwirkungen schützen. Und schließlich lassen sich in Kombination mit der Ausbildung der optisch wirksamen hochpräzisen Mikro-Struktur auch andere vorteilhafte Eigenschaften der Beschichtung zum Einsatz bringen, wie insbesondere eine Entspiegelung des Bauteils, insbesondere durch eine die Mikro-Struktur überlagernde Nano-Struktur (s. u.). In dem Umfang, wie die Reflexion reduziert wird, nimmt die Licht-Transmission zu, wodurch hinwiederum Verluste verringert werden.

Zur Vermeidung von Missverständnissen ist an dieser Stelle vorsorglich zu betonen, dass die Angaben, welche die Herstellung der Beschichtung in einem "zweiten Spritzprägewerkzeug" betreffen, nicht implizieren, dass im Rahmen des erfindungsgemäßen Herstellungsverfahrens zwingend auch ein erstes Spritzprägewerkzeug zum Einsatz kommt. Das zum Herstellen des aus Kunststoff bestehenden Bauteil-Kernkörpers zum Einsatz kommende erste Werkzeug kann vielmehr, je nach der individuellen Bauteilcharakteristik, ein erstes Spritzprägewerkzeug oder aber ein erstes Spritzgießwerkzeug sein.

Gemäß einer - weiter oben bereits angedeuteten - bevorzugten Weiterbildung des erfindungsgemäßen Verfahrens erfolgt das Herstellen des Bauteil-Kernkörpers aus einem Kern-Kunststoff durch Spritzgießen oder Spritzprägen in der geschlossenen ersten Kavität des ersten Spritzgieß- oder Spritzprägewerkzeugs unter Ausbildung einer Mikro-Struktur auf der ersten Hauptfläche des Bauteil-Kernkörpers. Im zweiten Spritzprägewerkzeug wird in diesem Falle ein Spalt belassen zwischen der mikrostrukturierten ersten Hauptfläche des darin aufgenommenen Bauteil-Kernkörpers und der dieser gegenüberliegenden, korrespondierend mikrostrukturierten Wand der zweiten Kavität. Insbesondere kann dabei, in besonders bevorzugter Ausgestaltung, die Mikro-Struktur des Bauteil-Kernkörpers als Fresnel-Grundstruktur und die Mikro-Struktur des Kunststoff-Bauteils als Fresnel-Feinstruktur ausgeführt sein. Die Mikro-Struktur (insbesondere Fresnel-Struktur) auf der ersten Hauptfläche des Bauteils folgt dabei in dem Sinne im Wesentlichen der korrespondierenden Mikro-Struktur (insbesondere Fresnel-Struktur) auf dem Bauteil-Kernkörper, dass die Beschichtung eine relativ gleichmäßige Schichtdicke aufweist. Selbst die Verwendung eines speziell für die Herstellung der Beschichtung optimierten, sich hinsichtlich des Brechungsindex' von dem Material des Bauteil-Kernkörpers (besonders bevorzugt PMMA) unterscheidenden Lack-Materials, bei dessen Verarbeitung in einem Spritzprägeschritt und Aushärtung unter Licht-Bestrahlung in der zweiten Kavität sich eine besonders konturenscharfe und somit optisch besonders hochwertige Mikrostruktur erzeugen lässt, welche - verglichen mit der korrespondierenden Mikro-Struktur auf dem Bauteil-Kernkörper - eine signifikant bessere optische Wirkung entfaltet, resultiert nicht in nennenswerten Verzerrungen; denn infolge der (abgesehen von Kanten-Radien und vergleichbaren Abweichungen vom Idealverlauf bei der Mikro-Struktur des Bauteil-Kernkörpers) im Wesentlichen zueinander korrespondierenden Mikro-Strukturen von Bauteil-Kernkörper und Beschichtung ist die Schichtdicke der Beschichtung sehr homogen.

Je nach der individuellen Verfahrensführung erweisen sich verschiedene Dicken der Beschichtungsschicht als vorteilhaft. Wird, im Sinne der vorstehend erläuterten bevorzugten Weiterbildung, bereits beim Herstellen des Bauteil-Kernkörpers auf dessen erster Hauptfläche eine Mikro-Struktur geformt, deren Geometrie im Wesentlichen die Mikro-Struktur der ersten Hauptfläche des fertigen Kunststoff-Bauteils entspricht bzw. diese vorgibt, so kommen vergleichsweise dünne Beschichtungsdicken von typischerweise nicht mehr als 50µm, bevorzugt zwischen 5µm und 30µm, besonders bevoruzugt zwischen 5µm und 15µm zum Einsatz. Ohne Ausbildung einer Mikro-Struktur bereits auf dem Bauteil-Kernkörper, wenn also die Mikro-Struktur auf der ersten Hauptfläche des fertigen Kunststoff-Bauteils ausschließlich zurückgeht auf eine entsprechende Profilierung der Oberfläche der auf eine glatte Fläche des Bauteil-Kernkörpers aufgebrachte LackBeschichtung, ist die Schichtdicke letzterer typischerweise entsprechend größer. Sie beträgt in diesem Falle bis zu 100µm. Beschichtungslacke, die sich für die Herstellung der Beschichtung durch das beschriebene Spritzprägen eignen, sind im Handel erhältlich, beispielsweise hergestellt durch Ultra Optics, 55445 Brooklyn Park (Minnesota, USA). Aus dem Sortiment dieses Unternehmens eignet sich insbesondere das Produkt "UV-XBT".

Weiter oben kam bereits die Möglichkeit zum Ausdruck, dass beim Spritzprägen der Beschichtung auf deren freier Oberfläche und somit auf der ersten Hauptfläche des Kunststoffbauteils eine die Mikro-Struktur überlagernde Nano-Struktur gebildet wird. Dies stellt eine ganz bevorzugte Weiterbildung der vorliegenden Erfindung dar, insbesondere wenn die Nano-Struktur entspiegelnde Eigenschaften aufweist, indem sie insbesondere als Mottenaugen-Struktur ausgeführt ist. Die Herstellung der Entspiegelung in einem Schritt gemeinsam mit der Herstellung der optisch wirksamen Mikro-Struktur ist ein die Wirtschaftlichkeit des erfindungsgemäßen Verfahrens nochmals entscheidend verbessernder Aspekt.

Gemäß einer anderen bevorzugten Weiterbildung der vorliegenden Erfindung kommt zur Herstellung der Beschichtung ein Wechselwerkzeug zum Einsatz, von dem zumindest eines der Teilwerkzeuge eine Grundstruktur und einen darin aufgenommenen, die zweite Kavität begrenzenden Einsatz ("Wechselkern") umfasst. Auch dies wirkt sich in erheblichem Maße positiv auf die Wirtschaftlichkeit aus. Der gleiche Vorteil kommt zum Tragen, wenn - gemäß einer anderen bevorzugten Weitebildung der Erfindung - (auch) zur Herstellung des Bauteil-Kernkörpers ein Wechselwerkzeug zum Einsatz kommt, von dem zumindest eines der Teilwerkzeuge eine Grundstruktur und einen darin aufgenommenen, die erste Kavität begrenzenden Einsatz ("Wechselkern") umfasst.

Wenn der Bauteil-Kernkörper gemäß der weiter oben erläuterten Weiterbildung an seiner nachfolgend zu beschichtenden Hauptfläche bereits eine Mikro-Struktur aufweist, so ist die präzise Zentrierung und Justierung des ausgehärteten Bauteil-Kernkörpers in dem zweiten Spritzprägewerkzeug sehr bedeutsam. Vor diesem Hintergrund zeichnet sich eine bevorzugte Weiterbildung des erfindungsgemäßen Verfahrens dadurch aus, dass beim Einlegen des erstarrten Bauteil-Kernkörpers in die geöffnete zweite Kavität des zweiten Spritzprägewerkzeugs eine Zentrierung des Bauteil-Kernkörpers mittels mindestens eines an diesem bestehenden funktionellen Merkmals erfolgt. Besonders bevorzugt kommt als jenes die Zentrierung bzw. Justierung bewirkendes funktionelles Merkmal ein an dem Bauteil-Kernkörper verbliebener Anguss zum Einsatz.

Zur Herstellung der Beschichtung kommt besonders bevorzugt ein lichthärtender Lack mit einer Viskosität von maximal 100 mPas zur Anwendung. Dies ist von Vorteil im Hinblick auf eine besonders hohe optische Qualität der Mikro-Struktur des Bauteils, namentlich durch besonders ausgeprägte scharfkantige Fresnel-Strukturen. Erst recht erweist sich eine so geringe Viskosität als vorteilhaft, wenn die erste Hauptfläche des Kunststoff-Bauteils eine die Mikro-Struktur überlagende Nano-Struktur aufweist (s. o.). Das Befüllen des Spalts mit dem flüssigem lichthärtenden Lack erfolgt dabei besonders bevorzugt über eine Mikro-Dosierpumpe; auch dies wirkt sich positiv auf die Qualität des einzelnen fertigen Bauteils aus, insbesondere aber auch auf die Reproduzierbarkeit und folglich eine gleichbleibend hohe Qualität eines in Serie hergestellten Loses von Bauteilen. Letzteres gilt erst recht, wenn das zur Herstellung der Beschichtung verwendete zweite Spritzprägewerkzeug einen mittels eines Verschlussventils verschließbaren Füllkanal aufweist; denn das Verschlussventil verhindert zuverlässig ein Rückdrücken des lichthärtenden Lacks in die Dosiereinrichtung während des flächiges Beaufschlagens des flüssigen Beschichtungslacks mit Druck durch Kraftschließen des zweiten Spritzprägewerkzeugs.

Angesichts der vorstehend dargelegten geringen Viskosität des flüssigen Beschichtungslacks kommt der Abdichtung der zweiten Kavität schon beim Einbringen des Beschichtungslacks in diese und somit vor dem flächigen Beaufschlagen des flüssigen Beschichtungslacks mit Druck (im Prägeschritt) eine herausragende Bedeutung zu. In dieser Hinsicht zeichnet sich eine bevorzugte Weiterbildung der Erfindung dadurch aus, dass die beiden Teilwerkzeuge des zweiten Spritzprägewerkzeugs über miteinander zusammenwirkende, bevorzugt als ineinandergreifende Dichtnut und Dichtfeder ausgeführte Dichtelemente verfügen, welche eine Abdichtung der zweiten Kavität bereits beim Befüllen des Spalts mit dem flüssigen lichthärtenden Beschichtungslack bewirken. Gemäß einer besonders bevorzugten Weiterbildung erfolgt indessen eine Abdichtung der zweiten Kavität nicht zwischen den beiden Teilwerkzeugen des zweiten Spritzprägewerkzeugs, sondern vielmehr gegenüber dem darin eingelegten Bauteil-Kernkörper, und zwar dadurch, dass der Spalt bereits beim Befüllen mit dem flüssigen lichthärtenden Beschichtungslack durch ein an dem die zweite Kavität begrenzenden, die mikrostrukturierte Wand aufweisenden Teilwerkzeug des zweiten Spritzprägewerkzeugs vorgesehenes, mit einem Dichtrand des in das zweiten Spritzprägewerkzeugs eingelegten Bauteil-Kernkörpers zusammenwirkendes Dichtelement abgedichtet wird, welches bevorzugt aus einer Dichtfeder besteht.

Bei dem lichthärtenden Lack kann es sich insbesondere um einen UV-härtenden Lack handeln, wobei in diesem Falle die mindestens eine in dem zweiten Spritzprägewerkzeug vorgesehene Lichtquelle entsprechend ausgeführt ist. Insbesondere dann, wenn der Bauteil-Kernkörper auf seiner ersten Hauptfläche keine (zu der Mikro-Struktur der darauf aufgebrachten Beschichtung korrespondierende) Mikrostruktur aufweist, kommt der optischen Qualität des Kunststoffbauteils zugute, wenn sich die Brechnungsindizes des Bauteil-Kernkörpers und der Beschichtung nur geringfügig unterscheiden. In diesem Sinne zeichnet sich eine besonders bevorzugte Weiterbildung der Erfindung dadurch aus, dass sich die Brechnungsindizes des Bauteil-Kernkörpers und der Beschichtung um nicht mehr als 0,02 unterscheiden.

Was die zur Durchführung des erfindungsgemäßen Verfahrens vorgesehene Einrichtung angeht, so ist in baulicher Hinsicht weiterhin besonders vorteilhaft, wenn das erste Spritzgieß- oder Spritzprägewerkzeug und das zweite Spritzprägewerkzeug fest miteinander verbunden sind, insbesondere indem sie Teil eines die erste Kavität und die zweite Kavität aufweisenden Kombinationswerkzeugs sind. Dies erlaubt die Verwendung ein und derselben Schließeinheit sowohl für das erste Spritzgieß- oder Spritzprägewerkzeug als auch für das zweiten Spritzprägewerkzeug.

Gemäß einer anderen bevorzugten Weiterbildung wird bei mindestens einem der Teilwerkzeuge des zweiten Spritzprägewerkzeugs die Kavität zumindest teilweise durch einen Glaseinsatz begrenzt, hinter dem sich die bzw. mindestens eine Lichtquelle befindet. Dies gilt selbst und gerade dann, wenn - gemäß einer besonders bevorzugten Ausgestaltung - die Licht-Bestrahlung der Beschichtungs-Schicht durch den Bauteil-Kernkörper hindurch erfolgt, d. h. die mindestens eine Lichtquelle sich nicht auf jener Seite befindet, auf der in dem zweiten Spritzprägewerkzeug auf dem in dieses eingelegten Bauteil-Kernkörper die Beschichtung aufgebracht wird. Das zur Ausformung der Beschichtung samt Mikro-Struktur ausgeführte Teilwerkzeug besteht dabei vorteilhafterweise aus Metall.

Weiterhin ist besonders vorteilhaft, wenn das Auswerfen des erstarrten Bauteil-Kernkörpers aus der geöffneten ersten Kavität mittels einer Auswerferanordnung mit Auswerferstiften erfolgt, welche auf einen den Funktionsbereich des späteren Kunststoff-Bauteils, insbesondere der optisch wirksamen Linse, umgebenden Tragrand wirken. Der Tragrand bewirkt im Übrigen einen Schutz des Bauteils während der Herstellungskette und kann überdies zur Zentrierung bzw. Justierung des Bauteil-Kernkörpers in dem zweiten Spritzprägewerkzeug und/oder - insbesondere im Falle einer formschlüssigen Interaktion mit letzterem über ineinandergreifende Nut-Feder-Strukturen - zur Abdichtung des mit dem lichthärtenden Lack zu befüllenden Spalts eine wichtige Rolle spielen.

Die in Umsetzung des erfindungsgemäßen Verfahrens herzustellenden optisch wirksamen Kunststoff-Bauteile lassen sich mit Vorteil in diversen Anwendungen zum Einsatz bringen. Ein großes Anwendungsgebiet sind optisch wirksame Linsen. Ein anderes Gebiet von bereits jetzt erheblicher, in Zukunft noch zunehmender Bedeutung sind beispielsweise VR-Brillen und vergleichbare Erzeugnisse.

Wie dies aus den vorstehenden Erläuterungen der vorliegenden Erfindung, insbesondere aber auch aus der nachfolgenden Erläuterung eines Ausführungsbeispiels erkennbar ist, korrespondieren die besonderen verfahrenstechnischen Gesichtspunkte der Erfindung zu einem Großteil zu analogen Merkmalen einer zur Durchführung des entsprechenden Verfahrens zum Einsatz kommenden Vorrichtung. Mit anderen Worten: Die vorliegende Erfindung manifestiert sich auch in der Vorrichtung, die speziell für die Durchführung des erfindungsgemäßen Verfahrens hergerichtet ist. Insoweit wird ausdrücklich auch die Vorrichtung als von der Erfindung umfasst, d. h. als ein Teil der Erfindung betrachtet; und die Anmelderin behält sich vor, Patentschutz auch für die entsprechend hergerichtete Vorrichtung als solche zu beanspruchen, ggf. auch auf dem Wege einer Teilanmeldung.

Im Folgenden wird die vorliegende Erfindung anhand eines in der Zeichnung veranschaulichten bevorzugten Ausführungsbeispiels einer zur Durchführung des erfindungsgemäßen Verfahrens hergerichteten Vorrichtung erläutert. Dabei zeigt
- Fig. 1: einen Schnitt durch das herzustellende optisch wirksame Kunststoff-Bauteil,
- Fig. 2: einen entlang der Schließachse angelegten Schnitt entlang der Linie II-II in Fig. 3 durch ein der Herstellung des Kunststoff-Bauteils nach Fig. 1 dienendes Kombinationswerkzeug, welches ein eine erste Kavität aufweisendes erstes Spritzgießwerkzeug und ein eine zweite Kavität aufweisendes zweites Spritzprägewerkzeug in sich vereinigt,
- Fig. 2a: das das erste Spritzgießwerkzeug betreffende Detail gemäß der entsprechenden Markierung A in Fig. 2,
- Fig. 3: eine senkrecht zur Schließachse angelegte Draufsicht auf den in Fig. 2 links gezeigten Teil des geöffneten Kombinationswerkzeugs nach Fig. 2,
- Fig. 4: einen Schnitt durch das in den Figuren 2 und 3 gezeigte Kombinationswerkzeug entlang der Linie IV-IV.

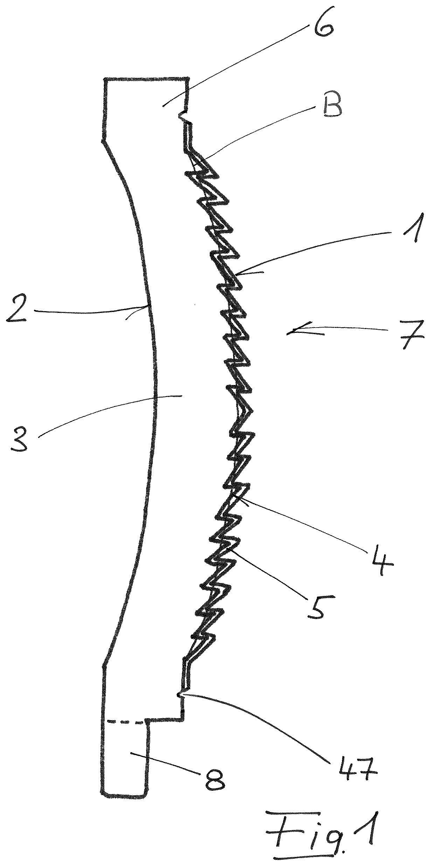

Das in Fig. 1 schematisch und nicht maßstabsgerecht veranschaulichte optisch wirksame Kunststoff-Bauteil weist eine erste Hauptfläche 1 und eine dieser gegenüberliegende zweite Hauptfläche 2 auf. Die über einer Mikro-Struktur in Form einer Fresnel-Struktur verfügende erste Hauptfläche 1 weist eine - durch die Linie B angedeutete - globale konvexe Krümmung auf, die zweite Hauptfläche 2 eine konkave Krümmung. Das Bauteil besteht aus einem Bauteil-Kernkörper 3 aus PMMA und einer einseitig, nämlich auf einer ersten Hauptfläche 4 des Bauteil-Kernkörpers 3 aufgebrachten, aus ausgehärtetem lichthärtenden Lack bestehenden Beschichtung 5. Der Bauteil-Kernkörper 3 weist dabei einen Tragrand 6 auf, welcher den optisch genutzten Funktionsbereich 7 ringförmig umgibt. Erkennbar ist der (zunächst) an dem Tragrand 5 verbliebene, ggf. später zu entfernende Anguss 8.

Die erste Hauptfläche 1 des Kunststoof-Bauteils ist durch die freie Oberfläche der Beschichtung 5 gebildet. Die zugeordnete erste Hauptfläche 4 des Bauteil-Kernkörpers 3 weist eine Mikro-Struktur in Form einer Fresnel-Grundstruktur auf. Diese korrespondiert hinsichtlich ihrer Geometrie im Wesentlichen zu der - durch die freie Oberfläche der Beschichtung 5 definierten - Mikro-Struktur des Bauteils in Form einer Fresnel-Feinstruktur. Die Beschichtung 5 ist dabei dünn gegenüber dem Bauteil-Kernkörper 3; ihre Dicke beträgt nicht mehr als 50µm.

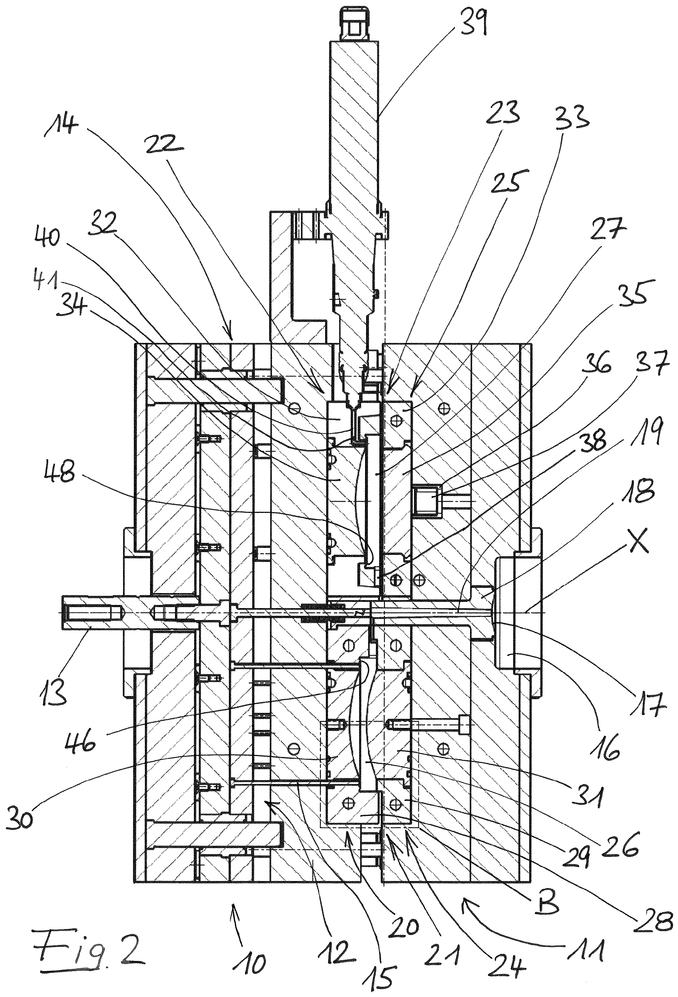

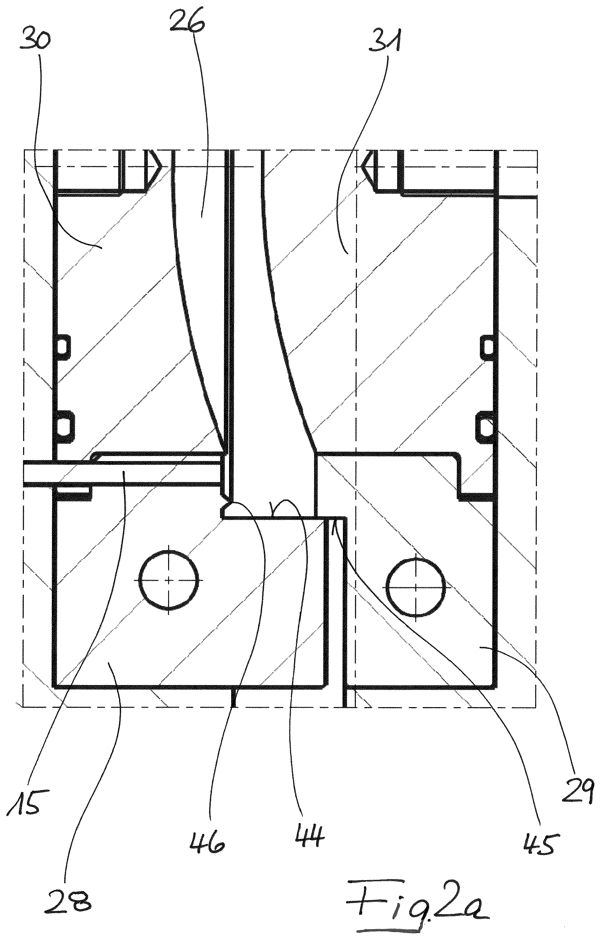

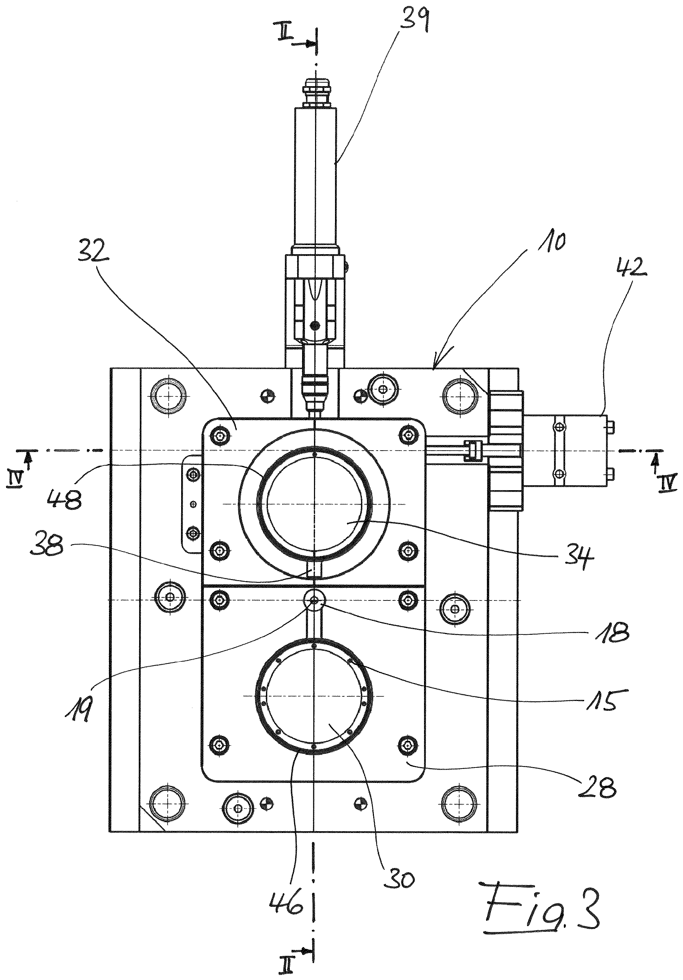

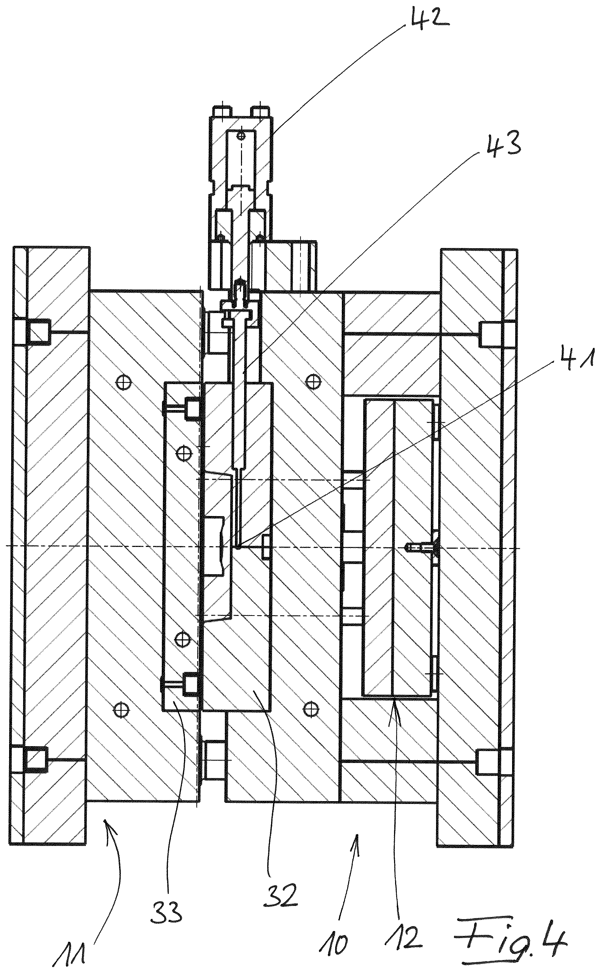

Die in den Figuren 2 bis 4 veranschaulichte Vorrichtung umfasst eine erste Plattenanordnung 10 und eine längs der Schließachse X relativ zu dieser bewegbare zweite Plattenanordnung 11. In erstere ist eine Auswerferanordnung 12 integriert, welche eine in dem Hohlraum der ersten Plattenanordnung 10 angeordnete, über das Druckstück 13 parallel zur Schließachse X bewegbare Auswerferplatte 14 und an dieser fixierte Auswerferstifte 15 umfasst. Die zweite Plattenanordnung 11 weist demgegenüber einen Düsendurchbruch 16 auf. In diesen mündet, von einer Düsenanlagefläche 17 umgeben, der in einem Einsatz 18 ausgeführte Einspritzkanal 19.

An der ersten Plattenanordnung 10 sind das erste Teilwerkzeug 20 eines ersten Spritzgießwerkzeugs 21 und das erste Teilwerkzeug 22 eines zweiten Spritzprägewerkzeugs 23 fixiert. In entsprechender Weise sind an der zweiten Plattenanordnung 11 das zweite Teilwerkzeug 24 des ersten Spritzgießwerkzeugs 21 und das zweite Teilwerkzeug 25 des zweiten Spritzprägewerkzeugs 23 fixiert. Sowohl das - der Herstellung des Bauteil-Grundkörpers 3 des Kunststoff-Bauteils dienende, eine erste Kavität 26 aufweisende - erste Spritzgießwerkzeug 21 als auch das - der Herstellung der Beschichtung 4 des Kunststoff-Bauteils dienende, eine zweite Kavität 27 aufweisende - zweite Spritzprägewerkzeug 23 sind dabei als Wechselwerkzeug ausgeführt. So umfassen die beiden Teilwerkzeuge 20, 24 des ersten Spritzgießwerkzeugs 21 jeweils eine rahmenartige Grundstruktur 28 bzw. 29 und einen darin aufgenommenen, die erste Kavität 26 begrenzenden Einsatz bzw. Wechselkern 30 bzw. 31. In entsprechender Weise umfassen das beiden Teilwerkzeuge 22, 25 des zweiten Spritzprägewerkzeugs 23 jeweils eine rahmenartige Grundstruktur 32 bzw. 33 und einen darin aufgenommenen, die zweite Kavität 27 begrenzenden Einsatz bzw. Wechselkern 34 bzw. 35.

Die Geometrie der - an den Einspritzkanal 19 angeschlossenen - ersten Kavität 26 des ersten Spritzgießwerkzeugs 21 entspricht der Geometrie des Bauteil-Kernkörpers 3. So gibt die Oberfläche des Wechselkerns 30 des ersten Teilwerkzeugs 20 des ersten Spritzgießwerkzeugs 21 die Geometrie der ersten Hauptfläche 4 des Bauteil-Kernkörpers 3 vor, wozu sie insbesondere ein - nicht gezeigtes - Negativ der an der ersten Hauptfläche 4 des Bauteil-Kernkörpers 3 auszuführenden Mikro-Struktur aufweist; und die Oberfläche des Wechselkerns 31 des zweiten Teilwerkzeugs 25 des ersten Spritzgießwerkzeugs 21 gibt als Negativ die Geometrie der - mit der zweiten Hauptfläche 2 des Kunststoff-Bauteils identischen - zweiten Hauptfläche des Bauteil-Kernkörpers 3 vor.

Bei dem zweiten Spritzprägewerkzeug 23 gibt die Oberfläche des Wechselkerns 34 des ersten Teilwerkzeugs 22 die Geometrie der ersten Hauptfläche 1 des (fertigen) Kunststoff-Bauteils vor, wozu sie insbesondere ein - nicht gezeigtes - Negativ der an der ersten Hauptfläche 1 des (fertigen) Bauteils auszuführenden Mikro-Struktur sowie der diese überlagernden Nano-Struktur (in Form einer Mottenaugenstruktur) aufweist. Der Wechselkern 35 des zweiten Teilwerkzeugs 25 des zweiten Spritzprägewerkzeugs 23 besteht, anders als die drei anderen Wechselkerne 30, 31 und 34, aus Glas. Hinter ihm, d. h. an der der zweiten Kavität 27 abgewandten Seite des Wechselkerns 35, ist in einer entsprechenden Aussparung 36 der zweiten Plattenanordnung 11 eine Lichtquelle 37 angeordnet. Die der zweiten Kavität 27 zugewandte, diese begrenzende Oberfläche des Wechselkerns 35 des zweiten Teilwerkzeugs 25 des zweiten Spritzprägewerkzeugs 23 ist eben ausgeführt, d. h. nicht an die (gewölbte) zweite Hauptfläche 2 des Bauteil-Kernkörpers 3 angepasst. Letzterer stützt sich somit an dem zweiten Teilwerkzeug 25 des zweiten Spritzprägewerkzeugs 23 "nur" über seinen Tragrand 6 ab.

Erkennbar ist die randseitige Aussparung 38 der zweiten Kavität 27, die der Aufnahme des Angusses 8 des Bauteil-Kernkörpers 3 dient, um diesen in der zweiten Kavität 27 zu zentrieren bzw. zu justieren. Weiterhin ist die Mikro-Dosierpumpe 39 erkennbar, mittels derer - in dem relevanten Verfahrensschritt - eine vorgegebene Menge an lichthärtbarem Lack in den zwischen dem ersten Teilwerkzeug 22 des zweiten Spritzprägewerkzeugs 23 und der ersten Hauptfläche 4 des in dieses eingelegten Bauteil-Kernkörpers 3 verbliebenen Spalt eingebracht werden kann. Der die Mikro-Dosierpumpe 39 mit der zweiten Kavität 27 verbindende Füllkanal 40 weist dabei ein Verschlussventil 41 auf, welches mittels des Ventil-Aktuators 42 über einen Kernzug 43 betätigbar ist.

Wie dies in Fig. 2, namentlich aber in der Detailansicht nach Fig. 2a erkennbar ist, ist das erste Spritzgießwerkzeug 21 als Tauchkanten-Werkzeug ausgeführt. Die rahmenartigen Grundstrukturen 28, 29 der beiden Teilwerkzeuge 20, 24 dichten demnach an zueinander korrespondierenden zylindrischen Wandabschnitten 44, 45 gegeneinander ab. Ferner ist in Fig. 2a der an der rahmenartigen Grundstruktur 28 des ersten Teilwerkzeugs 20 des ersten Spritzgießwerkzeugs 21 ausgebildete Ringvorsprung 46 erkennbar, der an dem in der ersten Kavität 26 spritzgegossenen Bauteil-Kernkörper 3 im Bereich von dessen Tragrand 6 eine ringförmig umlaufende Nut 47 erzeugt. Ist der Bauteil-Kernkörper 3 - zum Zwecke des Aufbringens der Beschichtung 5 auf dessen erster Hauptfläche 4 - in die zweite Kavität 27 des zweiten Spritzprägewerkzeugs eingelegt, so greift nach dem initialen Schließen des zweiten Spritzprägewerkzeugs 23, d. h. in der Verfahrensphase des Einbringens von Beschichtungslack in den zwischen dem Bauteil-Kernkörper 3 und dem ersten Teilwerkzeug 22 des zweiten Spritzprägewerkzeugs 23 bestehenden Spalt, eine an der rahmenartigen Grundstruktur 32 des ersten Teilwerkzeugs 22 des zweiten Spritzprägewerkzeugs 23 ausgebildete Ringfeder 48 in die Ringnut 47 ein und besorgt eine Abdichtung des besagten Spalts, wodurch eine räumliche Begrenzung der Beschichtung 5 auf den innerhalb der Ringnut 47 liegenden, von dieser umschlossenen Bereich des Bauteil-Kernkörpers 3 erfolgt. Bei geeigneter Ausführung von Ringnut 47 und Ringfeder 48 kommt zu der besagten Abdichtfunktion ergänzend eine Zentrierfunktion des Bauteil-Kernkörpers 3 in der zweiten Kavität 27 hinzu. Bei anschließenden finalen Schließen des zweiten Spritzprägewerkzeugs dringt die Ringfeder 48 entsprechend dem Maß des Prägehubs weiter in die Ringnut 46 ein.

Unter Verwendung der vorstehend erläuterten Vorrichtung lässt sich das in Fig. 1 veranschaulichte optisch wirksame Kunststoff-Bauteil herstellen, und zwar unter Abfolge der folgenden Fertigungsschritte:
Zunächst wird der Bauteil-Kernkörper 3 aus einem Kern-Kunststoff, nämlich PMMA, durch Spritzgießen in der geschlossenen ersten Kavität 26 des ersten Spritzgießwerkzeugs 21 hergestellt, wobei gemäß dem an dem ersten Teilwerkzeug 20 des ersten Spritzgießwerkzeugs 21 ausgeführten Mikrostruktur-Negativ auf der ersten Hauptfläche 4 des Bauteil-Kernkörpers 3 eine Mikro-Struktur in Form einer Fresnel-Grundstruktur ausgebildet wird. Wenn der Bauteil-Kernkörper 3 hinreichend ausgehärtet ist, wird die Vorrichtung - und somit die erste Kavität 26 - geöffnet, und der erstarrte Bauteil-Kernkörper 3 wird der geöffneten ersten Kavität 26 entnommen. Das Entformen erfolgt dabei mittels der Auswerferanordnung 12, deren Auswerferstifte 15 auf den Tragrand 6 des Bauteil-Kernkörpers 3 wirken.

Der erstarrte Bauteil-Kernkörper 3 wird anschließend in die geöffnete zweite Kavität 27 des zweiten Spritzprägewerkzeugs 23 eingelegt, wobei der Anguss 8 als Zentrierhilfe fungiert, indem er in die korrespondierende, an dem ersten Teilwerkzeug 22 des zweiten Spritzprägewerkzeugs 23 vorgesehene Aussparung 38 eingebracht wird.

Sodann wird das zweite Spritzprägewerkzeug 23 mit dem darin aufgenommenen Bauteil-Kernkörper 3 so weit geschlossen, dass zwischen der mikrostrukturierten ersten Hauptfläche 4 des Bauteil-Kernkörpers 3 und der dieser gegenüberliegenden, korrespondierend mikrostrukturierten, die zweite Kavität begrenzenden Wand des ersten Teilwerkzeugs 22 des zweiten Spritzprägewerkzeugs 23 ein Spalt verbleibt. In diesen - an seinem Umfang abgedichteten (s. o.) - Spalt wird anschließend mittels der Dosierpumpe 39 über den Füllkanal 40 - bei geöffnetem Verschlussventil 41 - eine vorgegebene Menge an flüssigem lichthärtendem Beschichtungslack eingebracht.

Im Anschluss daran wird, nachdem zuvor das Verschlussventil 41 geschlossen wurde, der flüssige Beschichtungslack durch Kraftschließen des zweiten Spritzprägewerkzeugs 23 flächig mit Druck beaufschlagt, so dass er sich in dem zunehmend enger werdenden Spalt verteilt, wodurch sich auf der ersten Hauptfläche 4 des Bauteil-Kernkörpers 3 eine Beschichtung 5, d. h. eine Beschichtungs-Schicht bildet. Entsprechend dem an dem ersten Teilwerkzeug 22 des zweiten Spritzprägewerkzeugs 23 bestehenden Negativ wird dabei auf der - durch die freie Oberfläche der Beschichtungs-Schicht gebildeten - ersten Hauptfläche 1 des optisch wirksamen Kunststoff-Bauteils eine Mikro-Struktur - in Form einer im Wesentlichen zu der Fresnel-Grundstruktur des Bauteil-Grundkörpers korrespondierenden, gegenüber dieser aber konturenschärferen Fresnel-Feinstruktur - mit einer diese überlagernden Nano-Struktur ausgebildet. Die Beschichtungs-Schicht wird sodann in dem weiterhin geschlossenen zweiten Spritzprägewerkzeug 23 durch Bestrahlen - durch den Bauteil-Kernkörper 3 hindurch - mit Licht aus der Lichtquelle 37 ausgehärtet.

Schließlich wird die zweite Kavität 27 geöffnet und das fertige optisch wirksame Kunststoff-Bauteil, welches aus dem erstarrten Bauteil-Kernkörper 3 und der auf dessen erster Hauptfläche 4 ausgeführten ausgehärteten, die mikrostrukturierte und nanostrukturierte Hauptfläche 1 des Kunststoff-Bauteils ausbildenden Beschichtung 5 besteht, aus der zweiten Kavität 27 entnommen.

## Patentansprüche

1. Verfahren zur Herstellung eines optisch wirksamen Kunststoff-Bauteils, insbesondere einer Linse, mit zwei einander gegenüberliegenden Hauptflächen (1, 2), von denen zumindest eine erste Hauptfläche (1) eine Mikro-Struktur aufweist, umfassend die folgenden Schritte:
- Herstellen eines Bauteil-Kernkörpers (3) aus einem Kern-Kunststoff durch Spritzgießen oder Spritzprägen in einer geschlossenen ersten Kavität (26) eines ersten Spritzgieß- oder Spritzprägewerkzeugs (21);
- Öffnen der ersten Kavität (26) und Entnehmen des erstarrten Bauteil-Kernkörpers (3) aus der geöffneten ersten Kavität (26);
- Einlegen des erstarrten Bauteil-Kernkörpers (3) in eine geöffnete zweite Kavität (27) eines zweiten Spritzprägewerkzeugs (23);
- Schließen des zweiten Spritzprägewerkzeugs (23) mit dem darin aufgenommenen Bauteil-Kernkörper (3) unter Belassung eines Spalts zwischen der ersten Hauptfläche (4) des Bauteil-Kernkörpers (3) und einer dieser gegenüberliegenden, mikrostrukturierten Wand der zweiten Kavität (27);
- zumindest teilweises Befüllen des Spalts mit einem flüssigen lichthärtenden Beschichtungslack;
- flächiges Beaufschlagen des flüssigen Beschichtungslacks mit Druck durch Kraftschließen des zweiten Spritzprägewerkzeugs (23) unter Bildung einer gegenüber dem Bauteil-Kernkörper (3) dünnen Beschichtungs-Schicht auf der ersten Hauptfläche (4) des Bauteil-Kernkörpers (3), wobei die Mikro-Struktur der ersten Hauptfläche (1) des optisch wirksamen Kunststoff-Bauteils auf der freien Oberfläche der Beschichtungs-Schicht (5) gebildet wird;
- Aushärten der Beschichtungs-Schicht (5) durch deren Bestrahlen mit Licht in dem geschlossenen zweiten Spritzprägewerkzeug (23) aus mindestens einer in das zweite Spritzprägewerkzeug (23) integrierten, in die zweite Kavität (27) hinein strahlenden Lichtquelle (37);
- Öffnen der zweiten Kavität (27) und Entnehmen des den erstarrten Bauteil-Kernkörper (3) und die auf dessen erster Hauptfläche (4) ausgeführte ausgehärtete, die mikrostrukturierte Hauptfläche (1) des Kunststoff-Bauteils ausbildende Beschichtung (5) umfassenden optisch wirksamen Kunststoff-Bauteils aus der zweiten Kavität.

2. Verfahren nach Anspruch 1, **dadurch gekennzeichnet, dass** bei mindestens einem der Teilwerkzeuge (22, 25) des zweiten Spritzprägewerkzeugs (23) die zweite Kavität (27) zumindest teilweise durch einen Glaseinsatz begrenzt wird, hinter dem sich die bzw. mindestens eine Lichtquelle (37) befindet.

3. Verfahren nach Anspruch 1 oder Anspruch 2, **dadurch gekennzeichnet, dass** die Licht-Bestrahlung der Beschichtungs-Schicht (5) durch den Bauteil-Kernkörper (3) hindurch erfolgt.

4. Verfahren nach einem der Ansprüche 1 bis 3, **dadurch gekennzeichnet, dass** beim Spritzprägen der Beschichtung (5) auf deren freier Oberfläche und somit auf der ersten Hauptfläche (1) des Kunststoffbauteils eine die Mikro-Struktur überlagernde, bevorzugt als Mottenaugen-Struktur ausgeführte Nano-Struktur gebildet wird.

5. Verfahren nach einem der Ansprüche 1 bis 4, **dadurch gekennzeichnet, dass** zur Herstellung der Beschichtung (5) ein Wechselwerkzeug zum Einsatz kommt, von dem zumindest eines der Teilwerkzeuge eine Grundstruktur (32, 33) und einen darin aufgenommenen, die zweite Kavität (27) begrenzenden Einsatz ("Wechselkern") (34, 35) umfasst.

6. Verfahren nach einem der Ansprüche 1 bis 5, **dadurch gekennzeichnet, dass** zur Herstellung des Bauteil-Kernkörpers (3) ein Wechselwerkzeug zum Einsatz kommt, von dem zumindest eines der Teilwerkzeuge (20, 24) eine Grundstruktur (28, 29) und einen darin aufgenommenen, die erste Kavität begrenzenden Einsatz ("Wechselkern") (30, 31) umfasst.

7. Verfahren nach einem der Ansprüche 1 bis 6, **dadurch gekennzeichnet, dass** beim Einlegen des erstarrten Bauteil-Kernkörpers (3) in die geöffnete zweite Kavität (27) des zweiten Spritzprägewerkzeugs (23) eine Zentrierung des Bauteil-Kernkörpers (3) mittels mindestens eines an diesem bestehenden funktionellen Merkmals, bevorzugt in Form eines an ihm verbliebenen Angusses (8), erfolgt.

8. Verfahren nach einem der Ansprüche 1 bis 7, **dadurch gekennzeichnet, dass** das Befüllen des Spalts mit flüssigem lichthärtendem Lack über eine Mikro-Dosierpumpe (39) erfolgt.

9. Verfahren nach einem der Ansprüche 1 bis 8, **dadurch gekennzeichnet, dass** zur Herstellung des Bauteil-Kernkörpers (3) ein PMMA verwendet wird.

10. Verfahren nach einem der Ansprüche 1 bis 9, **dadurch gekennzeichnet, dass** zur Herstellung der Beschichtung (5) ein Lack mit einer Viskosität von maximal 100 mPas zur Anwendung kommt.

11. Verfahren nach einem der Ansprüche 1 bis 10, **dadurch gekennzeichnet, dass** sich die Brechnungsindizes des Bauteil-Kernkörpers (3) und der Beschichtung (5) um nicht mehr als 0,02 unterscheiden.

12. Verfahren nach einem der Ansprüche 1 bis 11, **dadurch gekennzeichnet, dass** das zur Herstellung der Beschichtung (5) verwendete zweite Spritzprägewerkzeug (23) einen mittels eines Verschlussventils (41) verschließbaren Füllkanal (40) aufweist, wobei das Verschlussventil (41) bevorzugt über einen Kernzug (43) betätigbar ist.

13. Verfahren nach einem der Ansprüche 1 bis 12, **dadurch gekennzeichnet, dass** das erste Spritzgieß- oder Spritzprägewerkzeug (21) und das zweite Spritzprägewerkzeug (23) fest miteinander verbunden sind, insbesondere indem sie Teil eines die erste Kavität (26) und die zweite Kavität (27) aufweisenden Kombinationswerkzeugs sind.

14. Verfahren nach einem der Ansprüche 1 bis 13, **dadurch gekennzeichnet, dass** das Auswerfen des erstarrten Bauteil-Kernkörpers (3) aus der geöffneten ersten Kavität (26) mittels einer Auswerferanordnung (12) mit Auswerferstiften (15) erfolgt, welche auf einen den Funktionsbereich des späteren Kunststoff-Bauteils, insbesondere der optisch wirksamen Linse, umgebenden Tragrand (6) wirken.

15. Verfahren nach einem der Ansprüche 1 bis 14, **dadurch gekennzeichnet, dass** die beiden Teilwerkzeuge (22, 25) des zweiten Spritzprägewerkzeugs (23) über miteinander zusammenwirkende, bevorzugt als ineinandergreifende Dichtnut und Dichtfeder ausgeführte Dichtelemente verfügen, welche eine Abdichtung der zweiten Kavität (27) bereits beim Befüllen des Spalts mit dem flüssigen lichthärtenden Beschichtungslack bewirken.

16. Verfahren nach einem der Ansprüche 1 bis 14, **dadurch gekennzeichnet, dass** der Spalt bereits beim Befüllen mit dem flüssigen lichthärtenden Beschichtungslack durch ein an dem die zweite Kavität (27) begrenzenden, die mikrostrukturierte Wand aufweisenden Teilwerkzeug (22) des zweiten Spritzprägewerkzeugs (23) vorgesehenes, mit einem bevorzugt als Dichtnut (47) ausgeführten Dichtrand des in das zweite Spritzprägewerkzeug (23) eingelegten Bauteil-Kernkörpers (3) zusammenwirkendes, bevorzugt aus einer Dichtfeder (48) bestehendes Dichtelement abgedichtet wird.

17. Verfahren nach einem der Ansprüche 1 bis 16, **dadurch gekennzeichnet, dass** das Herstellen des Bauteil-Kernkörpers (3) unter Ausbildung einer Mikro-Struktur auf der ersten Hauptfläche (4) des Bauteil-Kernkörpers (3) erfolgt, wobei beim Schließen des zweiten Spritzprägewerkzeugs (23) mit dem darin aufgenommenen Bauteil-Kernkörper (3) der Spalt zwischen der mikrostrukturierten ersten Hauptfläche (4) des Bauteil-Kernkörpers (4) und der dieser gegenüberliegenden, korrespondierend mikrostrukturierten Wand der zweiten Kavität (27) belassen wird.

18. Verfahren nach Anspruch 17, **dadurch gekennzeichnet, dass** die Mikro-Struktur des Bauteil-Kernkörpers (3) als Fresnel-Grundstruktur und die Mikro-Struktur des Kunststoff-Bauteils als Fresnel-Feinstruktur ausgeführt wird.
